# EUROPÄISCHE PATENTSCHRIFT

(11) **EP 0 908 709 B1**
(45) Veröffentlichungstag und Bekanntmachung des Hinweises auf die Patenterteilung: **02.02.2005**
(21) Anmeldenummer: 98117221.6
(22) Anmeldetag: 11.09.1998
(51) Int. Cl.: G01H 9/00, G01B 9/02

(54) **Vorrichtung zur berührungslosen Schwingungsmessung**
Device for contactless vibration measurement
Dispositif de mesure sans contact de vibrations

(30) Priorität: 16.09.1997 DE 19740678
(43) Veröffentlichungstag der Anmeldung: 14.04.1999
(73) Patentinhaber: Polytec GmbH, 76337 Waldbronn (DE)
(72) Erfinder: Lewin, Andrew Dr., 76337 Waldbronn (DE)
(74) Vertreter: Brommer, Hans Joachim, Dr.-Ing.

(56) Entgegenhaltungen:
- DE-A- 19 546 860
- US-A- 3 764 218
- US-A- 3 912 372
- VAN NETTEN S M: "Laser interferometer microscope for the measurement of nanometer vibrational displacements of a light-scattering microscopic object" JOURNAL OF THE ACOUSTICAL SOCIETY OF AMERICA, APRIL 1988, USA, Bd. 83, Nr. 4, Seiten 1667-1674, XP001010640 ISSN: 0001-4966

## Beschreibung

Die Erfindung betrifft eine Vorrichtung zur optischen Vermessung eines Objekts, insbesondere zur Weg- und/oder Schwingungsmessung, mittels eines Laserinterferometers, dessen Meßstrahl in den Strahlengang eines Mikroskops eingekoppelt wird, wobei die Vorrichtung eine Einrichtung zum etwa parallelen Verschieben des Meßstrahles aufweist.

Laserinterferometer stellen ideale Meßanordnungen für hochauflösende Weg- bzw. Schwingungsmessungen dar. Die Messungen finden dabei rein optisch, also berührungslos, statt. Sie eignen sich deshalb besonders auch für mikromechanische, mikroelektronische oder mikrobiologische Objekte, bei denen sich das Anbringen von z. B. für andere Schwingungsmeßverfahren üblichen Beschleunigungssensoren wegen der geringen Masse des Objektes von selbst verbietet.

Bei der Vermessung von derartig kleinen Objekten ist es wünschenswert, den zu vermessenden Bereich in einem Mikroskop beobachten und den Meßpunkt mit Hilfe des Mikroskops positionieren zu können. Dazu ist eine Anordnung bekannt, bei der ein Meßstrahl über den Beleuchtungspfad in den Strahlengang des Mikroskops eingekoppelt wird. Wegen der beim Einkoppeln über den Beleuchtungspfad einzuhaltenden geometrischen Bedingungen können Interferometer und Mikroskop nur als zusammengehörige Einheit ausgeführt werden. Dem Einsatz dieses Gerätes stehen also hohe Erstellungskosten entgegen, weil zusätzlich zum Interferometer immer auch noch ein Spezialmikroskop hergestellt werden muß, das, insbesondere hinsichtlich der Konstruktion seines Beleuchtungspfades, dem verwendeten Interferometer anzupassen ist.

Der Oberbegriff des Anspruches 1 geht aus von der ersten Veröffentlichung Laser interferometer microscope for the messurement of nanometer vibrational displacements of a light-scattering microscopic object" von Netten in Acoust. Soc. Am. 83 (4), April 1988, S. 1667 - 1074. Bei dieser Meßvorrichtung wird mit zwei Laserstrahlen gearbeitet, die auf dem Meßobjekt interferieren. Bewegungen des Meßobjektes können nur senkrecht zur Beobachtungsrichtung (In-Plane) gemessen werden.

Davon ausgehend besteht die Aufgabe der vorliegenden Erfindung darin, eine Vorrichtung zur berührungslosen Weg- und/oder Schwingungsmessung anzugeben, die ein leichteres und genaueres Vermessen einzelner Objektpunkte und die Analyse größerer Objektbereiche zuläßt. Weiterhin soll eine Vorrichtung zur berührungslosen Weg- und/oder Schwingungsmessung zur Verfügung gestellt werden, die an handelsüblichen Mikroskopen ohne aufwendige Umbauarbeiten eingesetzt werden kann

Diese Aufgabe wird erfindungsgemäß dadurch gelöst, daß die Einkopplung des Meßstrahles über einen Kamera-Anschluß (C-Mount) des Mikroskops erfolgt, das die genannte Verschiebeeinrichtung eine Verschiebung des Meßstrahl-Auftreffpunktes auf dem zu vermessenden Objekt bewirkt und daß der vom Meßobjekt zurückreflektierte oder gestreute Meßstrahl automatisch über den Kamera-Anschluß aus dem Strahlengang des Mikroskops ausgekoppelt und in das Meßsystem zurückgeführt wird.

Die Erfindung geht dabei von den folgenden Erkenntnissen aus: Bei herkömmlichen, nicht mit einem Mikroskop gekoppelten Interferometern ist eine Winkelverstellung des Meßstrahles üblich, um mehrere, nebeneinanderliegende Meßpunkte aufnehmen zu können. Dies würde in einem Mikroskop zu erheblichen Schwierigkeiten führen. Um mit dem Meßstrahl immer durch das Objektiv zu treffen, hätte dann nämlich der Punkt, um den der Meßstrahl verschwenkt werden müßte, im Inneren des Mikroskops zu liegen. Dieser Punkt müßte unter allen Umständen absolut präzise getroffen werden. Dies würde eine gegebenenfalls auf Kreisbahnen außerhalb des Mikroskops verlaufende, extrem präzise und damit sehr aufwendige Schwenkmechanik erfordern, wenn es sich überhaupt realisieren ließe. Ein Einbau einer solchen Mechanik in unterschiedliche Mikroskope wäre nicht möglich, da je nach Geometrie des Mikroskops der Schwenkpunkt eine andere Lage aufweisen müßte.

Durch das erfindungsgemäße Parallelverschieben des Meßstrahles wird es möglich, nicht nur einen, sondern mehrere Punkte des Meßobjektes zu erfassen, ohne das Meßobjekt zu bewegen, wobei der apparative Aufwand zur Verschiebung des Meßstrahles vergleichsweise gering ist

Durch das Einkoppeln des Meßstrahles über den Kameraanschluß (C-Mount) des Mikroskops durchfährt er praktisch die gesamte Mikroskop-Optik mit Ausnahme des Okulars, wodurch die Messung erheblich präziser ausgeführt werden kann, als im bekannten Fall.

Außerdem ergibt sich dadurch der Vorteil, daß die Meßvorrichtung universell an unterschiedlichen Mikroskopen eingesetzt werden kann, weil die genannten Kameraanschlüsse für Photo- oder Videokameras standardmäßig an den meisten handelsüblichen Mikroskopen vorhanden sind, in der Regel sogar mit genormten Anschlußmaßen. Man findet daher überall gleiche optische und mechanische Anschlußbedingungen vor. Dies gilt nicht nur für die Größe des Anschlusses, sondern auch für die Tatsache, daß die Mikroskop-Optik das vom Meßobjekt kommende Licht in einer definierten Ebene kurz hinter dem Ende des Kameraanschlußes fokussiert, nämlich dort, wo sich bei einer gegebenenfalls montierten Videokamera der CCD-Chip befindet.

Vorzugsweise wird das vom Objekt gestreute Licht über denselben Lichtweg, wie das gesendete Licht in das Interferometer zurückgeführt und interferiert dort mit dem Referenzstrahl. Dabei werden nur solche Bewegungsanteile des Meßobjektes erfaßt, die in Richtung des Meßstrahles verlaufen (Out-of-Plane). Hierdurch ergeben sich häufig Vorteile hinsichtlich der Positionierung der Meßvorrichtung relativ zum Meßobjekt.

Die Verschiebeeinrichtung gestattet vorteilhafterweise ein punkt- und/oder zeilenweises optisches Abtasten (Scannen) des Meßobjektes in beliebiger Richtung, zweckmäßig in x- und y-Richtung. Dazu wird der Meßstrahl entweder von Hand parallel verschoben oder seine Verschiebung wird automatisch vorgenommen, etwa unter Steuerung durch einen Computer.

Zum Parallelverschieben des Meßstrahles weist die Verschiebeeinrichtung eine etwa senkrecht zum Strahlengang lateral verschiebbare Linse auf. Da diese Linse eine sehr geringe Masse hat, läßt sie sich sehr schnell und präzise bewegen, was ein effektives und genaues Scannen ermöglicht.

Statt durch eine Linse kann die Parallelverschiebung des Strahles aber auch durch mehrere korrespondierende, schwenkbare und gegebenenfalls distanzierbare Spiegel erfolgen.

Zum Verstellen der Verschiebeeinrichtung werden wegen der kleinen nötigen Verstellwege vorteilhaft Mikrometerschrauben, Piezoelemente oder dergleichen verwendet. Piezoelemente lassen sich auch sehr gut an eine automatische Steuerung anschließen, um den Abtastvorgang für den Benutzer zu vereinfachen.

Zum Einkoppeln des Meßstrahles wird dieser zweckmäßigerweise auf eine Brennebene (Zwischenbildebene) des Mikroskops fokussiert. Dazu kann die Vorrichtung eine Fokussierlinse aufweisen. Von dieser Brennebene wird der fokussierte Meßstrahl dann durch die Optik des Mikroskops auf das Meßobjekt abgebildet.

Die Strahlzuführung zu der Verschiebeeinrichtung läßt sich einfach und vorteilhaft durch einen Lichtwellenleiter, etwa in Form einer Glasfaseroptik, realisieren. Vom mikroskopseitigen Ende des Lichtwellenleiters ist die erwähnte Fokussierlinse in einem Abstand angeordnet, der ihrer Brennweite entspricht. Durch die beschriebene Anordnung kann der Punkt auf den der Meßstrahl in der Brennebene fokussiert wird, durch Verschieben der verschiebbaren Linse lateral in zwei Achsen bewegt werden.

Besonders vorteilhaft ist es, wenn man das Objekt gleichzeitig betrachten und vermessen kann. Dazu wird der Meßstrahl über einen Strahlteiler in Form eines teildurchlässigen Spiegels bzw. optischen Kantenfilters eingekoppelt. Zweckmäßigerweise ist dieser Strahlteiler in einem Gehäuse angeordnet, das zumindest einen Anschluß für das Mikroskop, einen Anschluß für eine Kamera und einen Anschluß zum Einkoppeln des Meßstrahles aufweist.

Durch den teildurchlässigen Spiegel wird der Meßstrahl auf die Achse des Strahlenganges des Mikroskops geschwenkt. Andererseits läßt der teildurchlässige Spiegel Licht vom Meßobjekt zu einer Videokamera durch, so daß man das Objekt betrachten kann. Wenn der Spiegel auch noch einen Teil des vom Objekt reflektierten Meßstrahles zur Videokamera gelangen läßt, dann wird auch der Meßpunkt noch im Videobild abgebildet. Selbstverständlich kann diese Anordnung auch umgekehrt vorgenommen werden, so daß der Meßstrahl den Spiegel passiert, während das normale Licht vom Meßobjekt vom teildurchlässigen Spiegel zur Kamera reflektiert wird.

Vorteilhafterweise zeichnet sich der teildurchlässige Spiegel durch eine frequenzselektive Reflexivität aus. Er weist dazu eine hohe Transmission für sichtbares Licht (450 nm - 550 nm), aber eine geringe bezüglich des Meßstrahles (633 nm) auf. Vorteilhaft sind Werte von 80 % Transmission für das sichtbare Licht und 0,2 % für den Meßstrahl.

Da die Kamera durch den zwischengeschalteten Strahlteiler nicht mehr in der für sie vorgesehenen Brennebene des Mikroskops plaziert werden kann, sind hier weitere Linsen vorgesehen, um das Mikroskopbild in die Kamera abzubilden.

Weitere erfindungswesentliche Merkmale und Einzelheiten ergeben sich aus der Beschreibung eines Ausführungsbeispiels anhand der Zeichnung; dabei zeigt
- Figur 1: eine schematische Darstellung des Strahlengangs und der optischen Elemente eines Mikroskops mit einer aufgesetzten Vorrichtung zur optischen Vermessung;
- Figur 2: eine Verschiebeeinrichtung einer Vorrichtung nach Figur 1; und
- Figur 3: ein Ausführungsbeispiel einer Verschiebemechanik der Verschiebeeinrichtung nach Figur 2.

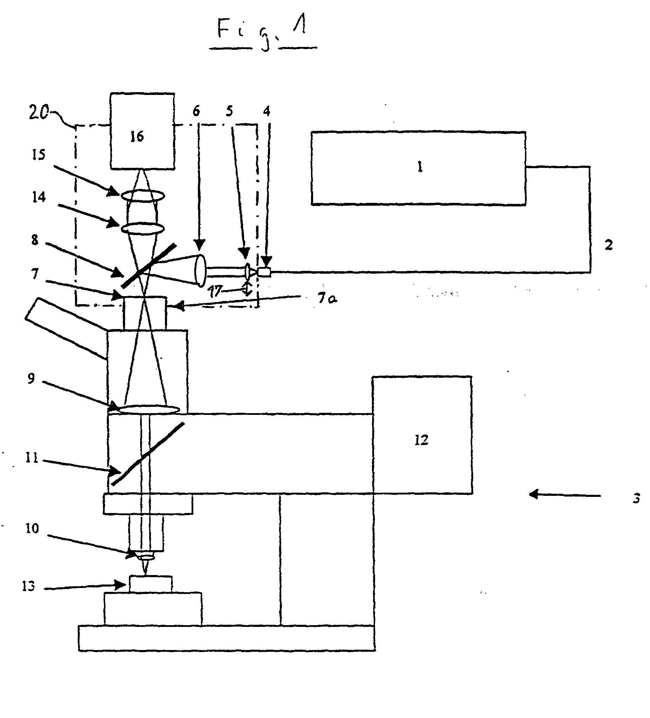

In Figur 1 erkennt man auf dem Objekttisch eines Mikroskops 3 ein Meßobjekt 13. Das Objekt 13 wird von einer im Mikroskop eingebauten Lampeneinheit 12 über einen Mikroskopstrahlteiler 11 durch das Objektiv 10 des Mikroskops 3 beleuchtet. Das vom Objekt 13 reflektierte Licht wird vom Objektiv 10 und gegebenenfalls einer Mikroskopkolimatorlinse 9 in das Okular des Mikroskops oder auf die Brennebene (Zwischenbildebene) 7 eines Kameraanschlusses 7a des Mikroskops abgebildet. Dabei passiert es seinerseits den Mikroskopstrahlteiler 11 der Beleuchtungsvorrichtung. Der Kameraanschluß 7a befindet sich an der Oberseite des Mikroskops 3 etwa senkrecht über dem Objekt 13.

In der Zeichnung ist rechts oben ein Laserinterferometer 1 schematisch dargestellt, das normalerweise neben das Mikroskop gestellt wird. Dabei handelt es sich vorzugsweise um ein sogenanntes Heterodyneinterferometer mit einer optischen Frequenzverschiebung des Meßstrahles gegenüber dem Referenzstrahl, wodurch eine vorzeichenrichtige Erfassung der Objektgeschwindigkeit möglich ist. Ein solches Interferometer ist z. B. aus der DE 44 24 900 A1 bekannt, auf die hiermit vollinhaltlich Bezug genommen wird.

Vom Laserinterferometer 1 wird ein Lichtstrahl mittels eines Lichtleiters 2 in Form einer faseroptischen Verbindung zum Mikroskop geführt. Das Licht, das aus dem Ausgangsende 4 der Faser austritt, wird mit Hilfe einer Kolimatorlinse 5 parallel zusammengefaßt. Eine Fokussierlinse 6 fokussiert den kolimierten Strahl in die Brennebene 7 des Mikroskops.

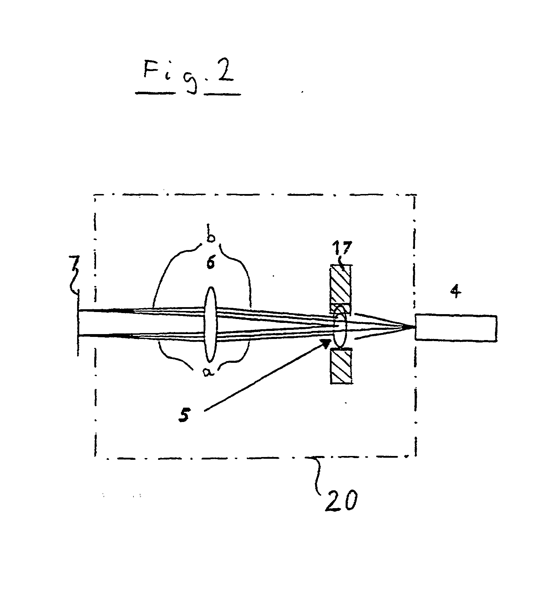

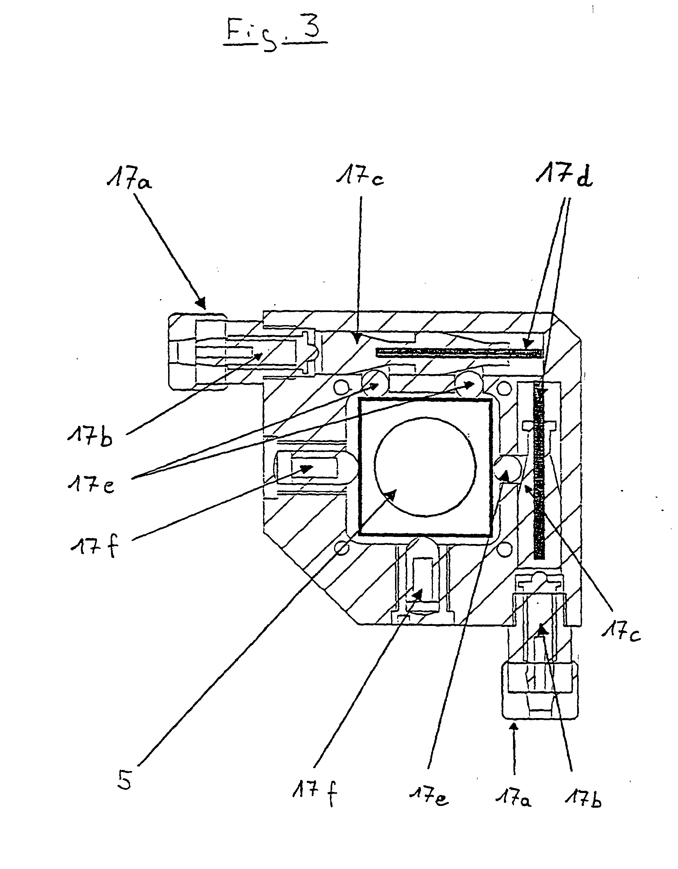

Wesentlich ist nun, daß die Vorrichtung eine Einrichtung zum etwa parallelen Verschieben des Lichtstrahles aufweist. Im dargestellten Ausführungsbeispiel enthält diese Verschiebeeinrichtung die Kolimatorlinse 5, die Fokussierlinse 6 sowie die in den Abbildungen 2 und 3 dargestellte Verschiebemechanik 17.

Das Prinzip des Parallelverschiebens läßt sich besonders gut der Figur 2 entnehmen. Dort ist die Kolimatorlinse 5 etwa senkrecht zur optischen Achse verschiebbar und in einer oberen und einer unteren Position dargestellt. Dabei wird jeweils das aus dem Faserende 4 austretende Licht zu einem parallelen Strahlenbündel a oder b gebündelt und verläuft unter einem Winkel gegenüber der optischen Achse zur Fokussierlinse 6. Dieser Winkel gegenüber der optischen Achse hängt von der Position der Kolimatorlinse 5 ab. Er läßt sich durch laterales Verschieben der Kolimatorlinse 5 mit Hilfe der Verschiebemechanik 17 verstellen. In Figur 2 wird so statt des Strahlenbündels a nach Verschieben der Kolimatorlinse 5 das Strahlenbündel b zur Fokussierlinse 6 weitergeleitet.

Durch die Fokussierlinse 6 wird das jeweils eintreffende parallele Strahlenbündel, also z. B. a oder b, fokussiert und auf die Brennebene 7 des Mikroskops abgebildet. Diese Brennebene ist in Figur 2 gegenüber Figur 1 um 90° gedreht dargestellt, um ein die Übersicht erschwerendes Überkreuzen der beiden abgebildeten Strahlbündel a und b zu vermeiden.

Durch ein Verschieben der Kolimatorlinse 5 senkrecht zur optischen Achse ergibt sich hinter dieser Linse also eine Winkelverstellung des parallelen Strahlbündels, die durch die Fokussierlinse 6 in eine Parallelverschiebung umgewandelt wird. Die Strahlbündel a und b verlaufen hinter der Linse 6 parallel zueinander, aber gegeneinander verschoben.

Bezüglich der vor der Fokussierlinse 6 stattfindenden Winkelverstellung ist das Faserende 4 der Kippunkt. Deshalb ist es genau in Entfernung der Brennweite der Fokussierlinse 6 von dieser anzuordnen. Andererseits muß die Fokussierlinse 6 zum Fokussieren des Strahls auch um ihre Brennweite von der Brennebene 7 des Mikroskops entfernt sein.

Die Verschiebemechanik 17, mit der die Kolimatorlinse 5 verschoben wird, ist in Figur 3 abgebildet. Durch Betätigen eines ihrer beiden Hauptversteller 17a schiebt man jeweils mittels eines inneren Verschiebeelementes 17b eine Kegelwelle 17c gegen eine Kegelwellenrückstellfeder 17d. Die Kegelwelle drückt auf einen oder mehrere Zylinderstifte 17e, die die Bewegung der Kegelwelle 17c in eine dazu orthogonale Bewegung umsetzen und auf einen etwa quadratischen Halterblock für die Linse 5 übertragen. Dieser Halterblock wird auf den den Zylinderstiften 17e jeweils gegenüberliegenden Seiten durch Halterblockrückstellfedern 17f abgestützt. Diese werden beim Hineindrehen der Hauptversteller 17a durch die beschriebene Mechanik zusammengedrückt, so daß sich eine laterale Verschiebung der Linse 5 in Richtung vom Hauptversteller weg ergibt. Umgekehrt wird beim Herausdrehen eines der Hauptversteller 17a die Linse 5 durch die jeweilige Halterblockrückstellfeder 17f seitlich auf den Hauptversteller 17a zu verschoben. Durch die orthogonale Anordnung zweier Hauptversteller ist die Linse 5 in einer Ebene in beliebiger Weise verschiebbar.

An dieser Stelle sei darauf hingewiesen, daß neben der abgebildeten rein mechanischen Verstellung über Mikrometerschrauben auch eine elektromechanische mit Piezo-Elementen denkbar ist. Sie kann im Prinzip analog aufgebaut werden, indem Piezo-Elemente an die Positionen der Zylinderstifte 17e gesetzt werden. Diese drücken dann je nach angelegter elektrischer Spannung mehr oder weniger stark auf den Halterblock und erzeugen so eine entsprechende mechanische Verschiebung der Kolimatorlinse 5. Die Steuerspannungen der Piezoelemente lassen sich vorteilhaft über eine Steuerelektronik erzeugen, die mit einem Logikprozessor verbunden sein kann, um ein rechnergestütztes Verschieben der Kolimatorlinse 5 und damit des Meßstrahles zu ermöglichen. So kann man das Meßobjekt 13 schnell und einfach an vielen, z. B. auf einem Raster nebeneinander angeordneten Punkten vermessen.

Zur Erläuterung des Meßvorganges sei wiederum auf die Figur 1 verwiesen. Der Meßstrahl wird vom Faserende 4 über die Kolimator- 5 und Fokussierlinse 6 auf die Brennebene 7 des Mikroskops in beschriebener Weise abgebildet, bzw. senkrecht zu dieser Brennebene parallel verfahren. Dabei wird er von einem Strahlteiler 8 umgelenkt, der den gleichzeitigen Einsatz einer Beobachtungskamera 16 ermöglicht und weiter unten beschrieben wird. Wie bei den meisten Mikroskopen wird im Ausführungsbeispiel von der Brennebene 7 des Mikroskops der Meßstrahl über die Optik des Mikroskops, also Mikroskopkolimatorlinse 9, Mikroskopstrahlteiler 11 und Objektiv 10 auf das Meßobjekt abgebildet. Ein paralleles Verschieben des Meßstrahles in der Brennebene 7 erzeugt dabei ebenfalls ein paralleles Verschieben des auf das Meßobjekt 13 abgebildeten Meßpunktes. Allerdings ist dieses Verschieben und ebenso die Größe des Meßpunktes durch die Mikroskopoptik entsprechend verkleinert.

Vom Meßobjekt 13 wird der Meßstrahl zurückreflektiert und durch die beschriebene optische Anordnung wieder in das Interferometer abgebildet. Eine Verschiebung der Linse 5 verschiebt also immer gleichzeitig Sender und Empfänger.

Bewegt sich nun das Meßobjekt 13 in Richtung des Meßstrahles, etwa durch Schwingungsvorgänge, oder ist es an unterschiedlichen Meßpunkten unterschiedlich hoch, so drückt sich dies in einer Veränderung der optischen Weglänge des Meßarmes (Weglänge des Meßstrahles zum Meßobjekt und zurück) des Interferometers aus. Entsprechend verändert sich die Interferenz von Meß- und Referenzstrahl im Interferometer 1 und die auslösende Veränderung des Meßobjektes 13 kann im Interferometer 1 in bekannter Weise detektiert und exakt vermessen werden.

Zur Realisierung des Abtastens mehrerer Meßpunkte, ohne das Meßobjekt 13 zu bewegen, ist es wichtig, den Meßstrahl in einer Brennebene des Mikroskops 3 zu fokussieren und ihn parallel zu verschieben. Eine solche Brennebene findet man standardisiert am Kameraanschluß zahlreicher Mikroskope. An diesem sogenannten C-Mount wird in der Regel eine Videokamera angeschlossen, deren CCD-Chip in der Brennebene 7 zu liegen kommt, so daß das Meßobjekt 13 direkt auf den Chip abgebildet wird. So läßt sich das Meßobjekt 13 statt durch das Okular des Mikroskops 3 über eine Videokamera beobachten, wobei der Beobachtungsvorgang gegebenenfalls aufgezeichnet werden kann. Diesen standardisierten Kameraanschluß 7a macht sich die Erfindung zunutze, indem die Vorrichtung zur optischen Vermessung des Meßobjektes 13 so aufgebaut ist, daß, und dies ist wesentlich, der Meßstrahl am Kameraanschluß 7a des Mikroskops 3 in dessen Strahlengang eingekoppelt wird. Somit können die gleichen oder sogar dieselben Bauteile und optischen Anordnungen an unterschiedlichsten Mikroskopen Verwendung finden.

Zum Vermessen des Meßobjektes 13 mit Hilfe des Interferometers 1 bei gleichzeitiger Beobachtung durch die Videokamera 16, etwa zum genauen Positionieren des Meßstrahles, dient die in Figur 1 abgebildete Anordnung. Sie weist dafür einen Strahlteiler 8 mit frequenzselektiver Reflexivität auf. Dieser hat im üblicherweise sehr schmalen Frequenzbereich des Laserinterferometers eine sehr hohe Reflexivität, so daß der aus dem Faserende 4 austretende Meßstrahl fast vollständig in den Strahlengang des Mikroskops 3 reflektiert wird. Nach Reflexion am Meßobjekt 13 wird der Meßstrahl wiederum vom Strahlteiler 8 zum allergrößten Teil in das Interferometer 1 zurückreflektiert, wobei aber etwa 0,2 % des Meßstrahles durch den Strahlteiler 8 hindurch transmittiert werden. Diese 0,2 % des Meßstrahles sind im Bild der Videokamera 16 sichtbar, so daß man erkennen kann, an welcher Stelle des Meßobjektes 13 gerade gemessen wird. Neben der hohen Reflexivität im Bereich der Wellenlänge des Meßstrahles, üblicherweise die von einem Helium-Neon-Laser erzeugten 633 nm, weist der Strahlteiler 8 eine sehr geringe Reflexivität im Bereich des sichtbaren Lichtes von cirka 450 nm bis 550 nm auf. Entsprechend werden etwa 80 % des sichtbaren Lichtes transmittiert und ergeben so ein lichtstarkes Bild in der Videokamera 16.

Da sich der CCD-Chip der Videokamera 16 in der beschriebenen erfindungsgemäßen Anordnung nicht mehr in der Brennebene 7 des Mikroskops 3 befindet, ist das vom Strahlteiler 8 transmittierte Licht durch weitere Linsen 14 und 15 in die Videokamera 16 abzubilden. Dies gilt sowohl für das von der Lampeneinheit 12 erzeugte sichtbare Licht als auch für den transmittierten Teil des Meßstrahles des Laserinterferometers 1. Die Kolimatorlinse 5, die Fokussierlinse 6, der Strahlteiler 8 und die weiteren Linsen 14 und 15 sind zweckmäßigerweise in einem strichpunktierten dargestellten Gehäuse 20 angeordnet, das an seinem unteren Ende einen der Norm entsprechenden Anschluß aufweist, der einfach an den C-Mount 7a gängiger Mikroskope angeschlossen werden kann. Das Gehäuse 20 weist weiterhin Anschlüsse für den Lichtleiter 2 des Interferometers 1, bzw. dessen Ende 4 und für eine handelsübliche Videokamera 16 auf.

Insgesamt zeichnet sich die Erfindung durch die Vorteile aus, daß ein genaues Positionieren des Meßpunktes auf dem Meßobjekt 13 erfolgen kann, ohne das Meßobjekt 13 bewegen zu müssen, daß darüberhinaus das Meßobjekt scannend vermessen werden kann und daß die zur Vermessung notwendigen Bauteile sich an jedem handelsüblichen Mikroskop mit Kameraanschluß ausschließen lassen, ohne dafür verändert oder optisch neu eingerichtet werden zu müssen.

## Patentansprüche

1. Vorrichtung zur optischen Vermessung eines Objektes (13), insbesondere zur Weg- und/oder Schwingungsmessung, mittels eines LaserInterferometers (1), dessen Meßstrahl in den Strahlengang eines Mikroskops (3) eingekoppelt wird, wobei die Vorrichtung eine Einrichtung (5, 6 und 17) zum etwa parallelen Verschieben des Meßstrahles aufweist, die eine Verschiebung des Meßstrahl-Auftreffpunktes auf dem zu vermessenden Objekt (13) bewirkt,
**dadurch gekennzeichnet,**
**daß** die Einkopplung des Meßstrahles über einen Kamera-Anschluß (7a) des Mikroskops (3) erfolgt und daß der vom Meßobjekt zurückreflektierte oder gestreute Meßstrahl über den Kamera-Anschluß (7a) aus dem Strahlengang des Mikroskops ausgekoppelt wird.

2. Vorrichtung nach Anspruch 1,
**dadurch gekennzeichnet,**
**daß** der Laserstrahl in einen Meßstrahl und einen Referenzstrahl geteilt wird und die Messung durch Überlagerung beider Strahlen erfolgt.

3. Vorrichtung nach Anspruch 1,
**dadurch gekennzeichnet,**
**daß** die Weg- und/oder Schwingungsmessung in Richtung des Meßstrahles erfolgt.

4. Vorrichtung nach Anspruch 1,
**dadurch gekennzeichnet,**
**daß** die Verschiebeeinrichtung (5, 6 und 17) ein punkt- und/oder zeilenweises optisches Abtasten des Meßobjektes (13) gestattet.

5. Vorrichtung nach einem der vorhergehenden Ansprüche,
**dadurch gekennzeichnet,**
**daß** die Verschiebeeinrichtung (5, 6 und 17) eine etwa senkrecht zum Strahlengang lateral verschiebbare Linse (5) und insbesondere auch einen oder mehrere miteinander korrespondierende, schwenkbare und gegebenenfalls distanzierbare Spiegel oder Planplatten aufweist.

6. Vorrichtung nach einem der vorhergehenden Ansprüche,
**dadurch gekennzeichnet,**
**daß** die Verschiebeeinrichtung (5, 6 und 17) Stellglieder in Form von Mikrometerschrauben (17a), Piezoelementen oder dergleichen aufweist.

7. Vorrichtung nach Anspruch 1,
**dadurch gekennzeichnet,**
**daß** die Verschiebeeinrichtung (5, 6 und 17) eine Fokussierlinse (6) aufweist, die den Meßstrahl auf eine Brennebene (7) des Mikroskops (3) fokussiert.

8. Vorrichtung nach einem der vorhergehenden Ansprüche,
**dadurch gekennzeichnet,**
**daß** die Strahlzuführung zur Verschiebeeinrichtung (5, 6 und 17) über einen Lichtleiter (2) erfolgt.

9. Vorrichtung nach Anspruch 7 und 8,
**dadurch gekennzeichnet,**
**daß** die Fokussierlinse (6) in einem Abstand vom Lichtleiterende (4) angeordnet ist, der ihrer Brennweite entspricht.

10. Vorrichtung nach Anspruch 1,
**dadurch gekennzeichnet,**
**daß** die Einkopplung des Meßstrahles über einen teildurchlässigen Strahlteiler (8) erfolgt, der insbesondere eine frequenzselektive Reflexivität aufweist.

11. Vorrichtung nach Anspruch 10,
**dadurch gekennzeichnet,**
**daß** der Strahlteiler (8) in einem Gehäuse mit zumindest einem Anschluß an das Mikroskop (3), einem Anschluß für eine Kamera (16) und einem Anschluß zum Einkoppeln des Meßstrahles angeordnet ist.

12. Vorrichtung nach Anspruch 1,
**dadurch gekennzeichnet,**
**daß** die Verschiebeeinrichtung (17) mit ihren beiden Linsen (5, 6) in einem Gehäuse (20) eingebaut ist, das zumindest einen Anschluß an das Mikroskop (3), einen Anschluß für den Meßstrahl des Interferometers (1) und gegebenenfalls einen Anschluß für eine Kamera (16) aufweist.

13. Vorrichtung nach Anspruch 12,
**dadurch gekennzeichnet,**
**daß** das Gehäuse (20) außerdem den Strahlteiler (8) und gegebenenfalls zumindest eine weitere Linse (14, 15) für den Kamera-Anschluß enthält.

## Claims

1. Arrangement for the optical measurement of an object (13), especially for measuring displacement and/or vibration, by means of a laser interferometer (1) the measuring beam of which is coupled into the beam path of a microscope (3), the arrangement having a device (5, 6 and 17) for approximately parallel displacement of the measuring beam, which device effects displacement of the point of incidence of the measuring beam on the object (13) being measured,
**characterised in that**
the coupling-in of the measuring beam is effected *via* a camera connection (7a) of the microscope (3), and the measuring beam reflected back or scattered by the object being measured is coupled out of the beam path of the microscope via the camera connection (7a).

2. Arrangement according to claim 1,
**characterised in that**
the laser beam is divided into a measuring beam and a reference beam and the measurement is carried out by superposition of the two beams.

3. Arrangement according to claim 1,
**characterised in that**
the measurement of displacement and/or vibration is effected in the direction of the measuring beam.

4. Arrangement according to claim 1,
**characterised in that**
the displacement device (5, 6 and 17) allows point-by-point and/or line-by-line optical scanning of the object (13) being measured.

5. Arrangement according to any one of the preceding claims,
**characterised in that**
the displacement device (5, 6 and 17) has a lens (5) that is laterally displaceable approximately perpendicularly to the beam path and especially also has one or more pivotable and optionally spaceable mirrors or plane-parallel plates that correspond with another.

6. Arrangement according to any one of the preceding claims,
**characterised in that**
the displacement device (5, 6 and 17) has positioning elements in the form of micrometer screws (17a), piezo elements or the like.

7. Arrangement according to claim 1,
**characterised in that**
the displacement device (5, 6 and 17) has a focussing lens (6) which focuses the measuring beam onto a focal plane (7) of the microscope (3).

8. Arrangement according to any one of the preceding claims,
**characterised in that**
the beam is supplied to the displacement device (5, 6 and 17) *via* a light guide (2).

9. Arrangement according to claim 7 and 8,
**characterised in that**
the focussing lens (6) is arranged at a distance from the end (4) of the light guide that corresponds to its focal width.

10. Arrangement according to claim 1,
**characterised in that**
the coupling-in of the measuring beam is effected *via* a semi-reflecting beam splitter (8) which has especially a frequency-selective reflectivity.

11. Arrangement according to claim 10,
**characterised in that**
the beam splitter (8) is arranged in a housing having at least one connection to the microscope (3), a connection for a camera (16) and a connection for coupling in the measuring beam.

12. Arrangement according to claim 1,
**characterised in that**
the displacement device (17) with its two lenses (5, 6) is installed in a housing (20) which has at least one connection to the microscope (3), a connection for the measuring beam of the interferometer (1) and optionally a connection for a camera (16).

13. Arrangement according to claim 12,
**characterised in that**
the housing (20) also comprises the beam splitter (8) and optionally at least one further lens (14, 15) for the camera connection.

## Revendications

1. Dispositif de mesure optique d'un objet (13), notamment pour mesurer une course et/ou des vibrations au moyen d'un interféromètre laser (1) dont le rayonnement mesureur est couplé dans la trajectoire de rayonnement d'un microscope (3), le dispositif présentant un système (5, 6 et 17) de déplacement sensiblement parallèle du rayonnement mesureur, qui provoque une translation du point d'incidence dudit rayonnement mesureur sur l'objet (13) à mesurer,
**caractérisé par le fait**
**que** le couplage du rayonnement mesureur s'effectue par l'intermédiaire d'un raccord caméra (7a) du microscope (3) ; et par le fait que le rayonnement mesureur, réfléchi ou diffusé par l'objet à mesurer, est extrait de la trajectoire de rayonnement du microscope par l'intermédiaire dudit raccord caméra (7a).

2. Dispositif selon la revendication 1,
**caractérisé par le fait**
**que** le rayonnement laser est scindé en un rayonnement mesureur et en un rayonnement de référence, et la mesure s'opère par superposition des deux rayonnements.

3. Dispositif selon la revendication 1,
**caractérisé par le fait**
**que** la mesure de la course et/ou des vibrations a lieu dans la direction du rayonnement mesureur.

4. Dispositif selon la revendication 1,
**caractérisé par le fait**
**que** le système de déplacement (5, 6 et 17) autorise un balayage optique, par points et/ou par lignes, de l'objet (13) à mesurer.

5. Dispositif selon l'une des revendications précédentes,
**caractérisé par le fait**
**que** le système de déplacement (5, 6 et 17) comprend une lentille (5) pouvant coulisser latéralement, à peu près perpendiculairement à la trajectoire de rayonnement, et notamment aussi un ou plusieurs miroir(s) ou panneau(x) se correspondant mutuellement, apte(s) au pivotement et pouvant éventuellement être espacé(s).

6. Dispositif selon l'une des revendications précédentes,
**caractérisé par le fait**
**que** le système de déplacement (5, 6 et 17) comporte des organes de réglage revêtant la forme de vis micrométriques (17a), de piézoéléments ou d'organes similaires:

7. Dispositif selon la revendication 1,
**caractérisé par le fait**
**que** le système de déplacement (5, 6 et 17) possède une lentille de focalisation (6) qui focalise le rayonnement mesureur sur un plan focal (7) du microscope (3).

8. Dispositif selon l'une des revendications précédentes,
**caractérisé par le fait**
**que** l'amenée du rayonnement vers le système de déplacement (5, 6 et 17) s'opère par l'intermédiaire d'un guide de lumière (2).

9. Dispositif selon les revendications 7 et 8,
**caractérisé par le fait**
**que** la lentille de focalisation (6) est agencée, vis-à-vis de l'extrémité (4) du guide de lumière, selon une distance correspondant à sa focale.

10. Dispositif selon la revendication 1,
**caractérisé par le fait**
**que** le couplage du rayonnement mesureur a lieu par l'intermédiaire d'un diviseur de rayonnements (8) partiellement perméable, présentant notamment une réflexivité à fréquence sélective.

11. Dispositif selon la revendication 10,
**caractérisé par le fait**
**que** le diviseur de rayonnements (8) est logé dans un carter comprenant au moins un raccordement au microscope (3), un raccordement destiné à une caméra (16) et un raccordement de couplage du rayonnement mesureur.

12. Dispositif selon la revendication 1,
**caractérisé par le fait**
**que** le système de déplacement (17) est intégré, avec ses deux lentilles (5, 6), dans un carter (20) comprenant au moins un raccordement au microscope (3), un raccordement affecté au rayonnement mesureur de l'interféromètre (1) et, le cas échéant, un raccordement destiné à une caméra (16).

13. Dispositif selon la revendication 12,
**caractérisé par le fait**
**que** le carter (20) renferme, en outre, le diviseur de rayonnements (8) et, éventuellement, au moins une lentille supplémentaire (14, 15) destinée au raccord caméra.
